# EUROPEAN PATENT APPLICATION

(11) **EP 4 672 838 A1**
(43) Date of publication of application: **31.12.2025**
(21) Application number: 23933491.5
(22) Date of filing: 21.04.2023
(51) Int. Cl.: H04W 72/0457

(54) **METHOD AND APPARATUS FOR DETERMINING SEGMENTATION POINT**

(71) Applicant: Huawei Technologies Co., Ltd., Shenzhen, Guangdong 518129 (CN)
(72) Inventor: CHEN, Zhenyuan, Shenzhen, Guangdong 518129 (CN); HUANG, Yuqi, Shenzhen, Guangdong 518129 (CN); CAI, Hua, Shenzhen, Guangdong 518129 (CN)
(74) Representative: Pfenning, Meinig & Partner mbB
(86) International application number: PCT/CN2023/089693
(87) International publication number: WO 2024/216615

(57) **Abstract**

This application relates to the field of wireless communication technologies, and discloses a method for determining a split point and an apparatus. The method includes: flexibly determining a split point between a baseband unit and a radio frequency unit at a physical layer based on a transmission bandwidth between the baseband unit and the radio frequency unit. Compared with a solution in which a split point between a baseband unit and a radio frequency unit at a physical layer is fixed, in the solutions, the split point between the baseband unit and the radio frequency unit at the physical layer can be flexibly adjusted based on the transmission bandwidth between the baseband unit and the radio frequency unit.

## Description

### TECHNICAL FIELD

This application relates to the field of communication technologies, and in particular, to a method for determining a split point and an apparatus.

### BACKGROUND

In a conventional design, a radio frequency unit is configured to implement a radio frequency function, and a baseband unit is configured to implement a baseband function. The baseband function may include at least a functional module at a physical layer. In a design, in addition to implementing the radio frequency function, the radio frequency unit may be further configured to implement some functional modules at the physical layer. The baseband unit is configured to implement other functional modules at the physical layer. In other words, the baseband unit and the radio frequency unit cooperate to implement functions of the physical layer. How to make the baseband unit and the radio frequency unit cooperate efficiently to implement the functions of the physical layer is a problem worth studying.

### SUMMARY

This application provides a method for determining a split point and an apparatus, to flexibly determine the split point for implementing functions by a radio frequency unit and a baseband unit at a physical layer.

According to a first aspect, a method for determining a split point is provided. The method is applied to an access network device side. For example, the method may be performed by an access network device or a component (a chip, a circuit, or the like) in the access network device. Further, the access network device includes a baseband unit and a radio frequency unit. The method may be performed by the baseband unit or a component (a chip, a circuit, or the like) used in the baseband unit. Alternatively, the method is performed by the radio frequency unit or a component (a chip, a circuit, or the like) used in the radio frequency unit. The method includes: determining the split point between the baseband unit and a radio frequency unit at a physical layer based on a transmission bandwidth between the baseband unit and the radio frequency unit, where the radio frequency unit implements a functional module between the split point and a radio frequency function at the physical layer, the baseband unit implements a functional module between the split point and a media access control MAC layer at the physical layer; and a functional module corresponding to the split point is implemented by the baseband unit or the radio frequency unit.

According to the foregoing design, the split point between the baseband unit and the radio frequency unit at the physical layer may be determined based on the transmission bandwidth between the baseband unit and the radio frequency unit. Compared with a solution in which a split point between a baseband unit and a radio frequency unit at a physical layer is fixed, in this solution, the split point between the baseband unit and the radio frequency unit at the physical layer can be flexibly determined based on different transmission bandwidths between the baseband unit and the radio frequency unit.

In a design, the method in this solution may be applied to an uplink transmission or a downlink transmission.

An example in which the method is applied to the uplink transmission is used. The physical layer includes at least one of the following functional modules: preprocessing, digital beamforming BF, resource element RE demapping, channel equalization, inverse discrete Fourier transform IDFT, demodulation, hybrid automatic repeat request HARQ combination, descrambling, de-rate matching, or decoding.

In a design, the transmission bandwidth between the baseband unit and the radio frequency unit is greater than a first threshold; and the split point between the baseband unit and the radio frequency unit at the physical layer is a functional module before the channel equalization. For example, the channel equalization includes at least one of the following functional modules: channel estimation CE, interference covariance matrix, or multiple-input multiple-output MIMO equalization; and that the split point between the baseband unit and the radio frequency unit at the physical layer is the functional module before the channel equalization includes: The split point between the baseband unit and the radio frequency unit at the physical layer is a functional module before the MIMO equalization.

According to the foregoing design, in an uplink joint processing process, the baseband unit and the radio frequency unit have different split points at the physical layer, and this may cause different performance gains of the uplink joint processing. For example, if the split point is closer to an FFT functional module in the preprocessing, a performance gain of the uplink joint processing is greater. In a solution in which the split point between the baseband unit and the radio frequency unit at the physical layer is fixed, even if there is an enough transmission bandwidth between the baseband unit and the radio frequency unit, the split point between the baseband unit and the radio frequency unit at the physical layer cannot be changed. However, in the foregoing design, when it is determined that the transmission bandwidth between the baseband unit and the radio frequency unit is large enough, for example, greater than the first threshold, it may be determined that the split point between the baseband unit and the radio frequency unit at the physical layer is before the channel equalization. If the split point is closer to the FFT functional module in the preprocessing, the performance gain of the uplink joint processing is greater.

In a design, the transmission bandwidth between the baseband unit and the radio frequency unit is less than or equal to a first threshold and is greater than a second threshold; and the split point between the baseband unit and the radio frequency unit at the physical layer is the channel equalization or a functional module after the channel equalization and before the HARQ combination. For example, the channel equalization includes at least one of the following functional modules: CE, interference covariance matrix, or MIMO equalization; and that the split point between the baseband unit and the radio frequency unit at the physical layer is the channel equalization or the functional module after the channel equalization and before the HARQ combination includes: The split point between the baseband unit and the radio frequency unit at the physical layer is the MIMO equalization or a functional module after the MIMO equalization and before the HARQ combination.

According to the foregoing design, when the transmission bandwidth between the baseband unit and the radio frequency unit is less than or equal to the first threshold and is greater than the second threshold, the transmission bandwidth between the baseband unit and the radio frequency unit is at a middle level. After the uplink signal is processed by the MIMO equalization functional module, a bandwidth required for the uplink signal is less. Therefore, a function of the MIMO equalization is considered to be implemented in the radio frequency unit. In addition, an application scenario of the foregoing design includes performing joint processing on the uplink signal. Therefore, the HARQ combination needs to be configured to be implemented in the baseband unit, so that the baseband unit performs the HARQ combination on a plurality of uplink signals uploaded by a plurality of radio frequency units. According to the foregoing design, the split point between the baseband unit and the radio frequency unit at the physical layer can be flexibly determined based on different transmission bandwidths between the baseband unit and the radio frequency unit.

In a design, the transmission bandwidth between the baseband unit and the radio frequency unit is less than or equal to a second threshold; and the split point between the baseband unit and the radio frequency unit at the physical layer is a functional module before the HARQ combination or after the HARQ combination.

According to the foregoing design, when the transmission bandwidth between the baseband unit and the radio frequency unit is less than or equal to the second threshold, it indicates that the transmission bandwidth between the baseband unit and the radio frequency unit is small, and a data amount of an uplink signal that can be transmitted is limited. In this case, a data amount of an uplink signal with the HARQ combination is small enough, so that the HARQ combination is implemented in the radio frequency unit. Whether a functional module after the HARQ combination is implemented in the radio frequency unit is not limited, so that the split point between the baseband unit and the radio frequency unit at the physical layer is flexibly determined.

In a design, the method further includes: demodulating an uplink signal of a primary cell or an uplink signal of a cooperating cell based on scheduling information of a demodulation reference signal DMRS of the cooperating cell and scheduling information of a DMRS of the primary cell; or performing joint demodulation on the uplink signal of the primary cell and the uplink signal of the cooperating cell based on the scheduling information of the DMRS of the cooperating cell and the scheduling information of the DMRS of the primary cell.

According to the foregoing design, because the primary cell and the cooperating cell are associated cells, the uplink signal of the primary cell and/or the uplink signal of the cooperating cell are/is demodulated based on the scheduling information of the DMRSs of the two cells, which can improve uplink signal demodulation performance, compared with demodulating an uplink signal of one cell based on scheduling information of a DMRS of the cell.

In a design, the method is applied to the baseband unit, and the method further includes: sending indication information of the split point to the radio frequency unit. Correspondingly, when receiving the indication information, the radio frequency unit may determine the split point between the baseband unit and the radio frequency unit at the physical layer based on the indication information. Further, a functional module implemented by the radio frequency unit at the physical layer is determined based on an indication.

In a design, the method is applied to the radio frequency unit, and the method further includes: sending indication information of the split point to the baseband unit. Correspondingly, when receiving the indication information, the baseband unit may determine the split point between the baseband unit and the radio frequency unit at the physical layer based on the indication information. Further, a functional module implemented by the baseband unit at the physical layer is determined based on an indication.

According to a second aspect, an apparatus is provided, including a corresponding unit or module performing the method described in the first aspect. The unit or module may be implemented by a hardware circuit, may be implemented by software, or may be implemented by a combination of a hardware circuit and software.

According to a third aspect, an apparatus is provided, including a processor and an interface circuit. The processor is configured to communicate with another apparatus through the interface circuit, and perform the method described in the first aspect. There are one or more processors.

According to a fourth aspect, an apparatus is provided, including a processor coupled to a memory. The processor is configured to execute a program stored in the memory, to perform the method described in the first aspect. The memory may be located inside or outside the apparatus. In addition, there may be one or more processors.

According to a fifth aspect, an apparatus is provided, including a processor and a memory. The memory is configured to store computer instructions. When the apparatus runs, the processor executes the computer instructions stored in the memory, to enable the apparatus to perform the method described in the first aspect.

According to a sixth aspect, a chip system is provided, including a processor or a circuit. The processor or the circuit is configured to perform the method described in the first aspect.

According to a seventh aspect, a computer-readable storage medium is provided. The computer-readable storage medium stores instructions, and when the instructions are run on a communication apparatus, the method described in the first aspect is performed.

According to an eighth aspect, a computer program product is provided. The computer program product includes a computer program or instructions, and when the computer program or the instructions is/are executed by an apparatus, the method described in the first aspect is performed.

According to a ninth aspect, a system is provided, including an apparatus and a terminal device performing the method according to the first aspect. Optionally, the system further includes a core network device.

For beneficial effects of the second aspect to the ninth aspect, refer to the descriptions of the first aspect.

### BRIEF DESCRIPTION OF DRAWINGS

FIG. 1 is a diagram of an architecture of a communication system according to an embodiment of this application;
FIG. 2 is a diagram of an architecture of an access network device according to an embodiment of this application;
FIG. 3 and FIG. 4 are diagrams of a protocol stack according to embodiments of this application;
FIG. 5 is a diagram of a fronthaul interface according to an embodiment of this application;
FIG. 6 is a schematic flowchart according to an embodiment of this application;
FIG. 7 is a diagram of a functional module of a physical layer according to an embodiment of this application;
FIG. 8 is a diagram of a radio frequency unit and a baseband unit according to an embodiment of this application;
FIG. 9, FIG. 10, FIG. 11, and FIG. 12 are diagrams of a split point at a physical layer according to embodiments of this application; and
FIG. 13 and FIG. 14 are diagrams of structures of apparatuses according to embodiments of this application.

### DESCRIPTION OF EMBODIMENTS

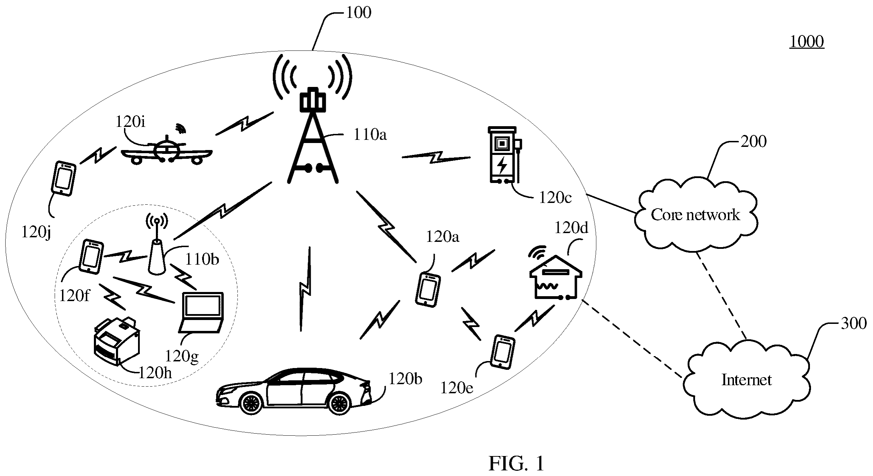

FIG. 1 is a diagram of a possible and non-limiting system. As shown in FIG. 1, a communication system 1000 includes a radio access network (radio access network, RAN) 100 and a core network (core network, CN) 200. The RAN 100 includes at least one access network device (for example, 110a and 110b in FIG. 1, which are collectively referred to as 110) and at least one terminal (for example, 120a to 120j in FIG. 1, which are collectively referred to as 120). The RAN 100 may further include another access network device, for example, a wireless relay device and/or a wireless backhaul device (not shown in FIG. 1). The terminal 120 is connected to the access network device 110 in a wireless manner. The access network device 110 is connected to the core network 200 in a wireless or wired manner. A core network device in the core network 200 and the access network device 110 in the RAN 100 may respectively be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4th generation (4th generation, 4G) or 5th generation (5th generation, 5G) mobile communication system, or a future-oriented evolved system (for example, a 6th generation (6th generation, 6G) mobile communication system). Alternatively, the RAN 100 may be an open access network (open RAN, O-RAN, or ORAN) or a cloud radio access network (cloud radio access network, CRAN). Alternatively, the RAN 100 may be a communication system that integrates the foregoing two or more systems.

### (1) Access network device

The access network device may also be referred to as a RAN node, a RAN entity, an access node, or the like, and forms a part of the communication system, to help a terminal implement radio access. For example, the plurality of access network devices 110 in the communication system 1000 may be devices of a same category, or may be devices of different categories. In some scenarios, roles of the access network device 110 and the terminal 120 are relative. For example, a network element 120i in FIG. 1 may be a helicopter or an uncrewed aerial vehicle, and may be configured as an access network device (for example, a mobile base station). For the terminal 120j that accesses the RAN 100 by using the network element 120i, the network element 120i is an access network device. However, for the access network device 110a, the network element 120i is a terminal. Both the access network device 110 and the terminal 120 may be referred to as communication apparatuses. For example, the network elements 110a and 110b in FIG. 1 may be understood as communication apparatuses having a function of an access network device, and the network elements 120a to 120j may be understood as communication apparatuses having a function of a terminal.

In a possible scenario, the access network device may be a base station (base station), an evolved base station (evolved NodeB, eNodeB), a transmission reception point (transmission reception point, TRP), a next generation NodeB (next generation NodeB, gNB), a next-generation base station in a 6G mobile communication system, a base station in a future mobile communication system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle, a vehicle-mounted device, or the like. For example, the access network device in a vehicle to everything (vehicle to everything, V2X) technology may be a road side unit (road side unit, RSU).

In another possible scenario, a plurality of access network devices cooperate to assist the terminal in implementing radio access, and different access network devices respectively implement some functions of the access network device. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, in this application, a CU, a CU-CP, a CU-UP, a DU, and an RU are used as an example for description. Any one of the CU (or the CU-CP or the CU-UP), the DU, and the RU in this application may be implemented by using a software module, a hardware module, or a combination of a software module and a hardware module.

### (2) Terminal

The terminal may be referred to as a terminal device, a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in this application.

### (3) Communication protocol between an access network device and a terminal

Communication between the access network device and the terminal complies with a specific protocol layer structure. A protocol layer includes a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a PHY layer, or the like. Optionally, the SDAP layer, the PDCP layer, the RLC layer, the MAC layer, and the PHY layer may also be collectively referred to as an access stratum. For specific descriptions of the foregoing protocol layers, refer to related technical specifications of the 3GPP.

In a design, for a correspondence between a network element in an ORAN system and a protocol layer function that can be implemented by the network element, refer to Table 1.

**Table 1**

| ORAN network element | 3GPP protocol layer function |
|---|---|
| O-CU-CP | RRC+PDCP-C |
| O-CU-UP | SDAP+PDCP-U |
| O-DU | RLC+MAC+PHY-high |
| O-RU | PHY-low |

In Table 1, the O-CU-CP is configured to implement a function of the RRC layer and a PDCP-control plane (control plane, CP). The O-CU-UP is configured to implement a function of the SDAP layer and a PDCP-user plane (user plane, UP). The O-DU is configured to implement a function of the RLC layer, the MAC layer, and a PHY-high (high) layer. The O-RU is configured to implement a function of a PHY-low (low) layer.

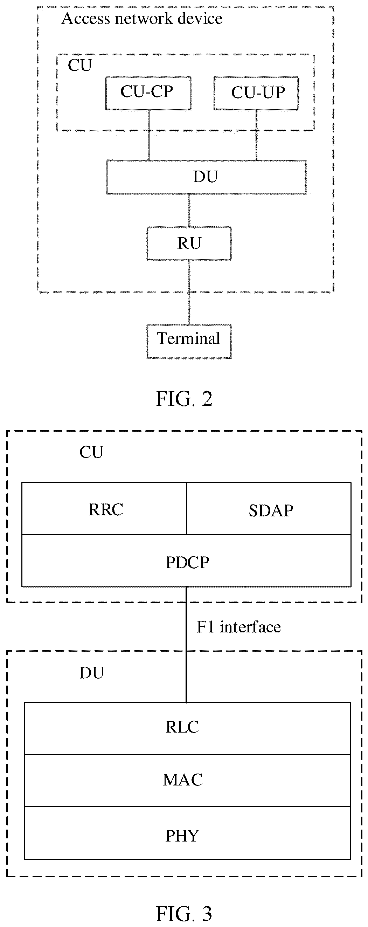

FIG. 2 is a diagram of an access network device. As shown in FIG. 2, the access network device may include one or more CUs, one or more DUs, and one or more RUs. For clarity, FIG. 2 shows only one CU, one DU, and one RU.

The CU is connected to a core network and one or more DUs. An interface between the CU and the DU may be referred to as an F1 interface. A control plane CP interface may be an F1-C interface, and a user plane UP interface may be an F1-U interface. Optionally, the CU may have some functions of the core network device.

The CU and the DU are configured based on protocol layer functions of a wireless network that are to be implemented by the CU and the DU. For example, the CU is configured to implement a function of a PDCP layer and a protocol layer above the PDCP layer, and the DU is configured to implement a function of a protocol layer below the PDCP layer. For example, the protocol layer above the PDCP layer includes an RRC layer and/or an SDAP layer, and the protocol layer below the PDCP layer includes an RLC layer, a MAC layer, and/or a PHY layer. In a design, as shown in FIG. 3, the CU is configured to implement a function of the PDCP layer, the RRC layer, and the SDAP layer, and the DU is configured to implement a function of the RLC layer, the MAC layer, and the PHY layer. Alternatively, the function of the PDCP layer may be configured to be implemented by the DU. For example, the CU is configured to implement the function of the protocol layer above the PDCP layer, and the DU is configured to implement the function of the PDCP layer and the function of the protocol layer below the PDCP layer.

Further, a function of the CU may be implemented by one entity, or may be implemented by different entities. For example, the function of the CU may be further divided, and separation of a control plane and a user plane is implemented by using different entities: a control plane CU-CP entity and a user plane CU-UP entity. The CU-CP entity and the CU-UP entity may be coupled to the DU, to jointly implement functions of the access network device. An interface between the CU-CP entity and the CU-UP entity may be an E1 interface. An interface between the CU-CP entity and the DU is an F1-C interface. An interface between the CU-UP entity and the DU is an F1-U interface.

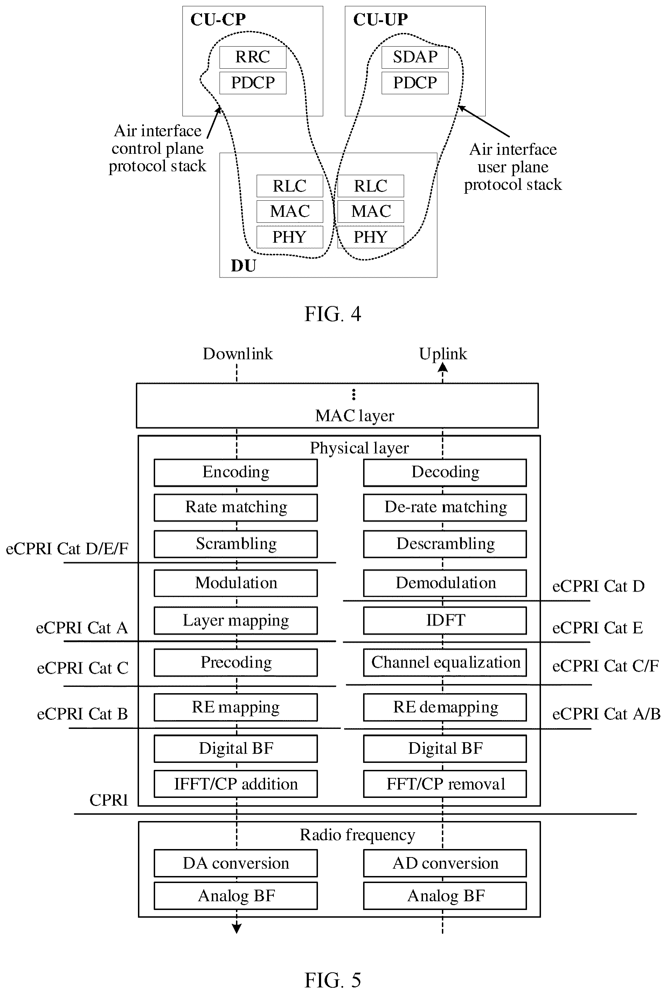

In a design, as shown in FIG. 4, when a CU is configured to implement a function of a PDCP layer, an RRC layer, and a SDAP layer, a CU-CP is configured to implement the function of the RRC layer and a control plane function of the PDCP layer, and a CU-UP is configured to implement the function of the SDAP layer and a user plane function of the PDCP layer. Further, the DU is configured to implement a function of an RLC layer, a MAC layer, and a PHY layer.

The CU-CP may interact with a network element configured to implement a control plane function in the core network. The network element configured to implement the control plane function in the core network may be an access and mobility function network element, for example, an access and mobility management function (access and mobility management function, AMF) in a 5G system. The access and mobility function network element is configured to be responsible for mobility management in a mobile network, for example, location update of a terminal, network registration of the terminal, and handover of the terminal.

The CU-UP may interact with a network element configured to implement a user plane function in the core network. The network element configured to implement the user plane function in the core network, for example, a user plane function (user plane function, UPF) in the 5G system, is configured to be responsible for forwarding and receiving data in the terminal.

It may be understood that the foregoing configuration of the CU and the DU is merely an example, and functions of the CU and the DU may alternatively be configured as required. For example, the CU or the DU may be configured to have functions of more protocol layers, or the CU or the DU may be configured to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, division into functions of the CU or the DU may alternatively be performed based on service categories or other system requirements. For example, division may be performed based on latency. Functions whose processing time needs to meet a requirement on small latency are set on the DU, and functions whose processing time does not need to meet the latency requirement are set on the CU.

One DU may be connected to one or more RUs. Functions of the DU and the RU may be configured in a plurality of manners according to a design. For example, the DU is configured to implement a baseband function. For example, the DU is configured to implement functions of an RLC layer, a MAC layer, and a PHY layer. The RU is configured to implement a radio frequency function. Alternatively, the DU and the RU may work together to implement the function of the PHY layer. The DU is configured to implement a higher-layer function of the PHY layer. The RU is configured to implement a lower-layer function of the PHY layer or implement the lower-layer function and the radio frequency function. The higher-layer function of the PHY layer may include a part of functions of the PHY layer, and the part of functions are closer to the MAC layer. The lower-layer function of the PHY layer may include another part of functions of the PHY layer, and the another part of functions is closer to a radio frequency side. Optionally, the radio frequency side may also be referred to as an intermediate radio frequency side.

### (4) Fronthaul interface

As shown in FIG. 5, a PHY layer is used as an example.

In downlink transmission, the physical layer may include one or more of the following functional modules: encoding, rate matching, scrambling, modulation, layer mapping, precoding, resource element (resource element, RE) mapping, digital beamforming (beamforming, BF), or inverse fast Fourier transform (inverse fast Fourier transform, IFFT)/cyclic prefix (cyclic prefix, CP) addition. A radio frequency function includes digital-to-analog (digital-to-analog, DA) conversion, analog BF, and/or another functional module.

In uplink transmission, the physical layer may include one or more of the following functional modules: decoding, de-rate matching, descrambling, demodulation, inverse discrete Fourier transform (inverse discrete Fourier transform, IDFT), channel equalization (or channel estimation), RE demapping, digital BF, a fast Fourier transform (fast Fourier transform, FFT)/CP removal, or the like. The radio frequency function includes analog-to-digital (analog-to-digital, AD) conversion, analog BF, and/or another functional module.

It may be understood that the one or more functional modules may be implemented by using software, hardware, or a combination of software and hardware. Physically, the functional modules may be discrete or integrated. It may be understood that the foregoing functional modules are merely examples. The physical layer and the radio frequency function may include more other modules (for example, a scheduling module, a power control module, a hybrid automatic repeat request (hybrid automatic repeat request, HARQ) module, a flow control module, a mobility management module, or an artificial intelligence (artificial intelligence, AI) module) according to a design, or do not include a specific functional module shown in FIG. 5 (for example, do not include a digital BF module).

There is an interface between a DU and an RU. The interface between the DU and the RU may be a common public radio interface (common public radio interface, CPRI), an enhanced common public radio interface (enhanced common public radio interface, eCPRI), or the like based on different functions of the DU and the RU and/or different split manners of the DU and the RU. An access network device further includes the fronthaul (fronthaul, FH) interface between the DU and the RU, to implement communication between the DU and the RU. The fronthaul interface includes but is not limited to the CPRI or the eCPRI. In a possible implementation, the DU is located in a BBU, the RU is located in an RRU/AAU/RRH, and an interface between the BBU and the RRU/AAU/RRH may also be referred to as a fronthaul interface. To implement the fronthaul interface, the BBU and the RRU/AAU/RRH may be connected via a fronthaul network, or the DU and the RU may be connected via a fronthaul network. For example, the fronthaul network includes but is not limited to a fiber direct connection and a wavelength division network.

The access network device may support one or more categories of fronthaul interfaces, and different fronthaul interfaces correspond to DUs and RUs having different functions. As shown in FIG. 5, if the fronthaul interface between the DU and the RU is a CPRI, the DU is configured to implement one or more of baseband functions. For example, the DU is configured to implement functions of an RLC layer, a MAC layer, a PHY layer, and the like. The RU is configured to implement one or more of radio frequency functions. For example, the RU is configured to implement functional modules such as AD conversion and/or analog BF in FIG. 5. Alternatively, if the fronthaul interface between the DU and the RU is an eCPRI, in comparison with the CPRI, some downlink and/or uplink baseband functions are moved from the DU to the RU for implementation. For example, one or more of functional modules at the PHY layer in the DU are moved to the RU for implementation. In other words, the DU may implement a part of functions of the PHY layer. The part of functions may be referred to as higher-layer functions of the PHY layer, and are closer to the MAC layer. In addition to implementing the radio frequency function, the RU is further configured to implement a part of functions of the PHY layer. The part of functions may be referred to as lower-layer functions of the PHY layer, and are closer to a radio frequency side.

Different manners of splitting between the DU and the RU correspond to different categories (category, Cat for short) of eCPRIs. FIG. 5 shows examples of six categories of eCPRIs that are represented by Cat A, B, C, D, E, and F (which may alternatively be represented as Options A to F, Options 1 to 6, or another manner). It may be understood that another split manner may exist between the DU and the RU, that is, another category of eCPRI may exist. This is not limited.

The eCPRI Cat A is used as an example. For downlink transmission, layer mapping is used as a split point. The DU is configured to implement the layer mapping and one or more functional modules before the layer mapping (that is, one or more of encoding, rate matching, scrambling, modulation, and layer mapping), and another functional module after the layer mapping (for example, one or more of RE mapping, digital BF, or IFFT/CP addition) is moved to the RU for implementation. For uplink transmission, RE demapping is used as a split point. The DU is configured to implement the RE demapping and one or more functional modules before the RE demapping (that is, one or more of decoding, de-rate matching, descrambling, demodulation, IDFT, channel equalization, and RE demapping), and another functional module after the demapping (for example, one or more of digital BF or FFT/CP removal) is moved to the RU for implementation.

Similarly, the eCPRI Cat B, the eCPRI Cat C, the eCPRI Cat D, the eCPRI Cat E, and the eCPRI Cat F respectively correspond to different manners of splitting between the DU and the RU. The split point is used as a boundary. A functional module from the split point to the MAC layer at the physical layer may be implemented by the DU, a functional module from the split point to the radio frequency function at the physical layer may be implemented by the RU, and a functional module corresponding to the split point may be implemented by the DU or the RU, which is not limited. For split points of various categories of eCPRIs, refer to FIG. 5. Details are not described one by one. For example, for the eCPRI Cat B, the RE mapping is used as a split point for downlink transmission, and the RE demapping is used as a split point for uplink transmission. For uplink transmission, the RE mapping and a functional module before the RE mapping are implemented by the DU, and a functional module after the RE mapping and a radio frequency function are implemented by the RU. For downlink transmission, the RE demapping and a functional module before the RE demapping are implemented by the DU, and a functional module after the RE demapping and a radio frequency function are implemented by the RU.

A split manner for an eCPRI may be symmetric for an uplink and a downlink, such as the eCPRI Cat B and the eCPRI Cat C shown in FIG. 5. Alternatively, a split manner for an eCPRI may be asymmetric for an uplink and a downlink, such as the eCPRI Cat A, the eCPRI Cat D, the eCPRI Cat E, and the eCPRI Cat F shown in FIG. 5. This is not limited. Optionally, for the uplink and/or the downlink, different split manners may be configured for different channels or different channel groups, that is, different categories of eCPRIs are configured. One group of channels may include one or more channels.

In a possible design, the DU is located in the BBU, the RU is located in the RRU/AAU/RRH, a processing unit in the BBU and configured to implement a baseband function is referred to as a baseband high (baseband high, BBH) unit, and a processing unit in the RRU/AAU/RRH and configured to implement a baseband function is referred to as a baseband low (baseband low, BBL) unit.

In a design, regardless of the foregoing categories of fronthaul interfaces, in functional modules at the physical layer, a split point between the DU and the RU is fixed. In other words, the functional modules configured to be implemented by the DU and the RU at the physical layer are fixed. For example, the eCPRI Cat A is used as an example. For uplink transmission, RE demapping is used as a split point, the DU is fixedly configured to implement the RE demapping and one or more functional modules before the RE demapping, and the RU is fixedly configured to implement one or more functional modules after the RE demapping. How to flexibly determine a split point between a DU and an RU at a physical layer is a technical problem to be resolved in embodiments of this application.

In embodiments of this application, the split point between the DU and the RU at the physical layer is flexibly determined based on a transmission bandwidth of the DU and the RU. Optionally, for uplink transmission and downlink transmission, functional modules included in the physical layer may be different. The solution in embodiments of this application may be applied to uplink transmission to determine the split point between the DU and the RU at the physical layer. Alternatively, the solution may be applied to downlink transmission, to determine the split point between the DU and the RU at the physical layer, or the like. In subsequent descriptions, an example in which the split point between the DU and the RU at the physical layer is determined in uplink transmission is mainly used for description.

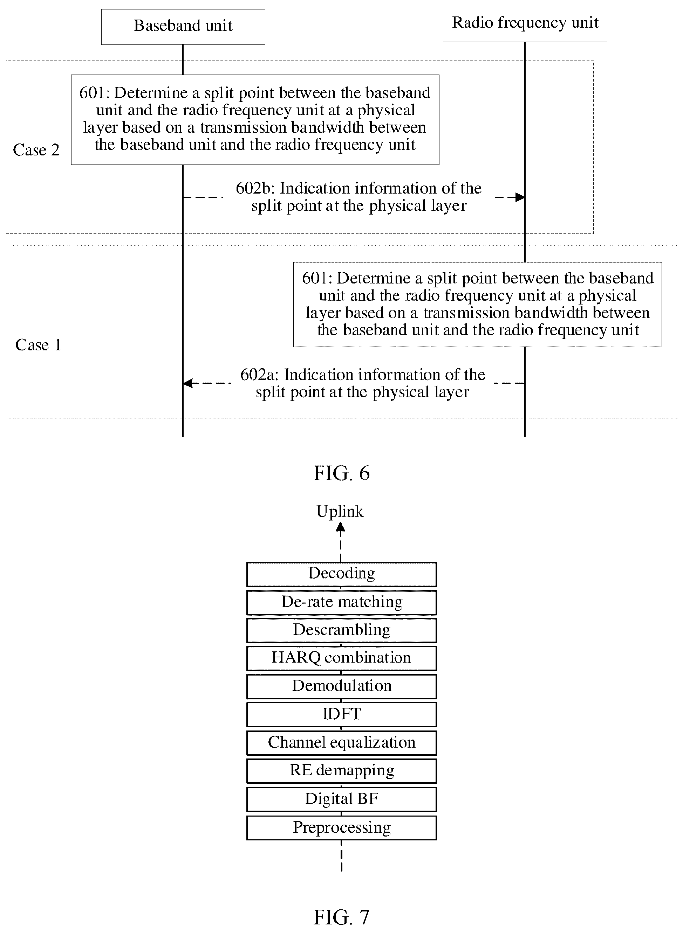

As shown in FIG. 6, a procedure is provided, and includes the following steps.

Step 601: Determine a split point between a baseband unit and a radio frequency unit at a physical layer based on a transmission bandwidth between the baseband unit and the radio frequency unit.

In functional modules included in the physical layer, the split point is used as a boundary, and a functional module at the physical layer from the split point to a MAC layer is implemented by the baseband unit. A functional module at the physical layer from the split point to a radio frequency function is implemented by the radio frequency unit. Optionally, a functional module corresponding to the split point may be implemented by the baseband unit or the radio frequency unit.

The baseband unit may be configured to implement a part of functional modules at the physical layer. For example, the baseband unit is configured to implement a higher-layer functional module at the physical layer, and the higher-layer functional module is closer to the MAC layer. Optionally, the baseband unit may be configured to implement functions of an RLC layer and the MAC layer. Further, the baseband unit may be further configured to implement a function of a PDCP layer, and the like. This is not limited. The baseband unit may be referred to as a BBU, and the baseband unit includes the foregoing DU, which is also referred to as that a DU is located in the baseband unit.

The radio frequency unit may be configured to implement other functional modules at the physical layer. For example, the radio frequency unit is configured to implement a lower-layer functional module at the physical layer, and the lower-layer functional module is closer to the radio frequency function. For example, as shown in FIG. 5, in downlink transmission, the radio frequency function includes DA conversion, analog BF, and another functional module. In uplink transmission, the radio frequency function includes AD conversion, analog BF, and another functional module. The radio frequency unit may be referred to as an RRU, an AAU, an RRH, or the like. The radio frequency unit includes the foregoing RU, which is also referred to as that an RU is located in the radio frequency unit. Further, the radio frequency unit is further configured to implement the radio frequency function, for example, to implement the radio frequency function shown in FIG. 5.

In a design, a first threshold and a second threshold may be obtained. The first threshold and the second threshold may be preset, specified in a protocol, determined by an access network device, or determined by another device and indicated to the access network device. This is not limited. For example, the access network device or another device may determine the first threshold, the second threshold, and the like by using simulation, a related algorithm, or the like. For details, refer to the following descriptions. This is not limited. A value of the first threshold is greater than that of the second threshold.

The following uses uplink transmission and downlink transmission as examples to describe determining the split point between the baseband unit and the radio frequency unit at the physical layer based on the transmission bandwidth between the baseband unit and the radio frequency unit.

### Uplink transmission

Uplink transmission is used as an example. As shown in FIG. 5, when obtaining an uplink signal from a radio frequency function, the physical layer sequentially processes the uplink signal in a bottom-up sequence of functional modules included in the physical layer. For example, the uplink signal is sequentially processed by functional modules such as FFT/CP removal, digital BF, RE demapping, channel equalization, IDFT, demodulation, descrambling, de-rate matching, and decoding. Finally, an uplink signal obtained through physical layer processing is transmitted to the MAC layer, and the MAC layer continues to perform MAC layer processing on the uplink signal. In the physical layer processing, in the bottom-up processing process of the uplink signal, a data amount of the uplink signal becomes smaller, a transmission bandwidth required by the uplink signal is also reduced accordingly, and an amount of information carried by the uplink signal becomes smaller. When the transmission bandwidth between the baseband unit and the radio frequency unit is greater than the first threshold, it is considered that the transmission bandwidth between the baseband unit and the radio frequency unit is large enough, and the split point between the baseband unit and the radio frequency unit at the physical layer may be disposed at a functional module close to a radio frequency side at the physical layer. However, when the transmission bandwidth between the baseband unit and the radio frequency unit is smaller than the first threshold and greater than the second threshold, it is considered that the transmission bandwidth between the baseband unit and the radio frequency unit is general, and the split point of a functional module between the baseband unit and the radio frequency unit at the physical layer may be a functional module disposed at the middle of the physical layer. Alternatively, when the transmission bandwidth between the baseband unit and the radio frequency unit is smaller than the second threshold, it is considered that the transmission bandwidth between the baseband unit and the radio frequency unit is small, and the split point between the baseband unit and the radio frequency unit at the physical layer may be disposed at a functional module close to a MAC layer side at the physical layer.

In uplink transmission, the access network device may jointly process signals of a plurality of cells, to achieve better communication quality. For example, the plurality of cells include one primary cell and at least one cooperating cell. For example, if signal quality of a cell needs to be improved, the cell may be referred to as a primary cell. If an uplink signal of a cell causes strong interference to the primary cell, the cell can be used as a cooperating cell of the primary cell. Alternatively, if a cell receives good signal quality of a terminal served by the primary cell, the cell may also be used as a cooperating cell of the primary cell. Alternatively, a cell that is geographically close to the primary cell is used as a cooperating cell of the primary cell. The access network device may jointly process the signals of the plurality of cells. Therefore, the functional module for uplink processing at the physical layer shown in FIG. 5 may further include a HARQ combination functional module. The HARQ combination functional module is specifically located between the demodulation functional module and the descrambling functional module, as shown in FIG. 7. Another difference between FIG. 7 and FIG. 5 lies in that, in FIG. 7, a "preprocessing" functional module is used to replace the "FFT/CP removal" functional module in FIG. 5. It may be understood that the preprocessing functional module in FIG. 7 includes functional modules such as FFT and/or CP removal.

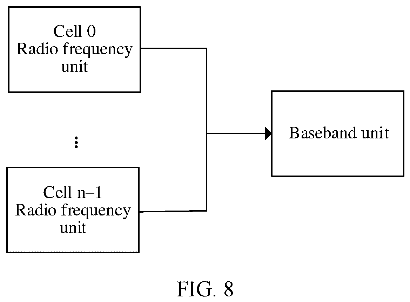

In a design, as shown in FIG. 8, the access network device includes one baseband unit and n radio frequency units, the baseband unit is connected to the n radio frequency units, the n radio frequency units are managed by the baseband unit, and n is an integer greater than 1. Each of the n radio frequency units corresponds to one cell. The baseband unit jointly processes uplink signals of the n cells corresponding to the n radio frequency units. For example, the uplink signals of the n cells belong to an uplink signal of a same terminal, and the uplink data signals of the n cells may be jointly processed, to improve a performance gain of the uplink signal of the terminal. Alternatively, the uplink signals of the n cells belong to different terminals, and an uplink signal of another terminal may be used as known interference, to reduce interference to an uplink signal of a terminal that needs to be received, so as to improve a receiving gain of the uplink signal, and the like.

For a radio frequency unit i, where i is an integer greater than or equal to 0 and less than or equal to n-1, a split point between the radio frequency unit i and the baseband unit at the physical layer is determined based on a transmission bandwidth between the radio frequency unit i and the baseband unit. Optionally, for transmission bandwidths between different radio frequency units in the n radio frequency units and the baseband unit being the same or different, split points between the different radio frequency units and the baseband unit at the physical layer may be the same or different. For example, if the transmission bandwidths between different radio frequency units in the n radio frequency units and the baseband unit are the same, or a difference between the transmission bandwidths is less than a threshold, or the like, the n radio frequency units and the baseband unit have a same split point at the physical layer. For example, as described below, if transmission bandwidths between the n radio frequency units and the baseband unit are all greater than the first threshold, it is determined that the split points between the n radio frequency units and the baseband unit at the physical layer are all channel equalization. Alternatively, if the transmission bandwidths between different radio frequency units in the n radio frequency units and the baseband unit are different, or a difference between the transmission bandwidths is greater than a threshold, or the like, different radio frequency units in the n radio frequency units and the baseband unit have different split points at the physical layer. This is not limited.

With reference to Examples 1 to 3, the following describes determining the split point between the baseband unit and the radio frequency unit at the physical layer based on the transmission bandwidth between the baseband unit and the radio frequency unit.

### Example 1

If the transmission bandwidth between the baseband unit and the radio frequency unit is greater than (or greater than or equal to) the first threshold, the split point between the baseband unit and the radio frequency unit at the physical layer is before the channel equalization shown in FIG. 7. For example, as shown in FIG. 7, functional modules before channel equalization include preprocessing, digital BF, RE demapping, and the like. Optionally, the split point between the baseband unit and the radio frequency unit at the physical layer is determined as preprocessing, digital BF, RE demapping, or the like. It may be understood that, in a description, when the transmission bandwidth between the baseband unit and the radio frequency unit is greater than the first threshold, it may be determined that the split point between the baseband unit and the radio frequency unit at the physical layer is the channel equalization. In this case, the split point channel equalization belongs to the baseband unit.

For an uplink signal of a radio frequency unit, before the channel equalization functional module processes the uplink signal, a data amount of the uplink signal is large, and the uplink signal carries a large amount of information, which is beneficial for jointly processing the uplink signal. Therefore, in embodiments of this application, when the transmission bandwidth between the baseband unit and the radio frequency unit is large enough, for example, greater than the first threshold, the split point between the radio frequency unit and the baseband unit at the physical layer may be disposed before the channel equalization. In this case, the uplink signal reported by the radio frequency unit to the baseband unit carries much information, which facilitates combination of uplink signals reported by a plurality of radio frequency units. Further, in channel equalization processing, the baseband unit may perform joint channel estimation on a plurality of uplink signals reported by the plurality of radio frequency units, to improve accuracy of determined uplink channel information and improve performance of demodulating the uplink signals.

Refer to FIG. 7. For example, if the transmission bandwidth between the radio frequency unit i in the n radio frequency units of the access network device and the baseband unit is greater than the first threshold, it may be determined that the split point between the radio frequency unit i and the baseband unit at the physical layer is digital BF, and the split point digital BF belongs to the radio frequency unit i. For example, in a cell i, the radio frequency unit i receives an uplink signal i from the terminal, and performs processing such as radio frequency processing, physical layer preprocessing, and digital BF on the uplink signal i to obtain a processed uplink signal i. The radio frequency unit i sends the processed uplink signal i to the baseband unit. The baseband unit performs RE demapping on the n processed uplink signals. In the channel equalization, channel estimation is jointly performed on the n uplink signals with the RE demapping, and IDFT, demodulation, descrambling, de-rate matching, decoding, and other processing are sequentially performed on an output of the channel equalization. It should be noted that, in the foregoing example, HARQ combination in FIG. 7 is optional. For example, in the channel equalization, joint channel estimation is performed on the n uplink signals. For example, an input of channel equalization is the n uplink signals corresponding to the n radio frequency units, and an output of the channel equalization is a result of joint channel estimation. In this case, IDFT, demodulation, descrambling, de-rate matching, decoding, and the like may be sequentially performed on the output of the channel equalization. In this case, HARQ combination in FIG. 7 may not exist. Alternatively, HARQ combination in FIG. 7 may exist, and an output of demodulation may be transparently transmitted to an input of descrambling through HARQ combination.

Optionally, the first threshold is predefined, specified in a protocol, determined by the access network device, or determined by another device, for example, indicated by a core network device to the access network device. This is not limited. In a design, the first threshold may be determined according to a method such as AI, big data analysis, or simulation. For example, it is found through simulation that, before channel equalization processing is performed on an uplink signal, a transmission bandwidth for the uplink signal is generally greater than a threshold (for example, the first threshold), and in this case, the threshold may be the first threshold, which is used as a determining threshold.

In a design, the channel equalization may include at least one of the following: channel estimation (channel estimation, CE), interference covariance matrix Ruu, multiple-input multiple-output (multiple-input multiple-output, MIMO) equalization, or the like. That the split point between the baseband unit and the radio frequency unit at the physical layer is a functional module before the channel equalization is specifically as follows: The split point between the baseband unit and the radio frequency unit at the physical layer is a functional module before the MIMO equalization. For example, the functional module before the MIMO equalization may include preprocessing, digital BF, RE demapping, CE, Ruu, and other functional modules, and the split point may be any one of the foregoing functional modules. It may be understood that the split point may belong to the baseband unit or the radio frequency unit. This is not limited. It may be understood that, in a description, when the transmission bandwidth between the baseband unit and the radio frequency unit is greater than the first threshold, the split point between the baseband unit and the radio frequency unit at the physical layer may be the MIMO equalization, and in this case, the split point MIMO equalization belongs to the baseband unit.

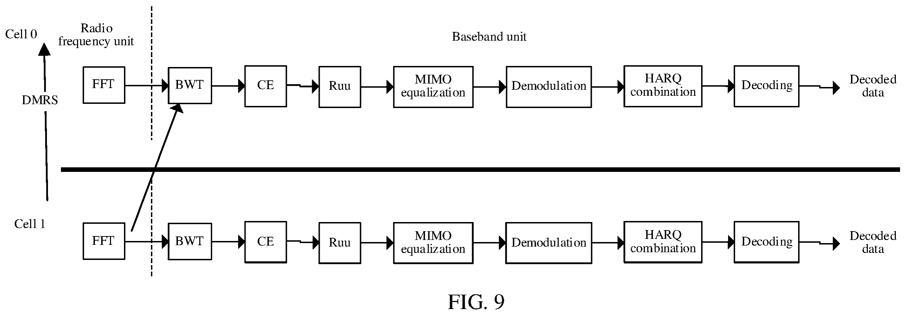

As shown in FIG. 9, the physical layer includes at least one of the following functional modules: FFT, beam weight transformation (beam weight trans, BWT), CE, Ruu, MIMO equalization, demodulation (demodulation), HARQ combination, decoding (decoding), and the like.

It may be understood that the FFT in FIG. 9 corresponds to the preprocessing in FIG. 7. In this case, the preprocessing in FIG. 7 includes the FFT. The BWT in FIG. 9 corresponds to the digital BF in FIG. 7, and the BWT may be a specific implementation of the digital BF. The CE, Ruu, and MIMO equalization in FIG. 9 correspond to the channel equalization in FIG. 7. The CE, Ruu, and MIMO equalization may be a specific implementation of the channel equalization. The IDFT in FIG. 7 is optional, is not involved in the uplink signal processing process in FIG. 9, and is not reflected in FIG. 9 again. The descrambling and de-rate matching in FIG. 7 are optional, are not involved in the uplink signal processing process in FIG. 9, and are not reflected in FIG. 9 again.

As described above, when the transmission bandwidth between the baseband unit and the radio frequency unit is greater than the first threshold, it may be determined that the split point between the baseband unit and the radio frequency unit at the physical layer is a functional module before the MIMO equalization. In the example in FIG. 9, it may be specifically determined that the split point between the baseband unit and the radio frequency unit at the physical layer is a functional module, for example, FFT, BWT, CE, or Ruu.

In the descriptions of FIG. 9, when the transmission bandwidth between the baseband unit and the radio frequency unit is greater than the first threshold, the split point between the baseband unit and the radio frequency unit at the physical layer is the BWT, and the BWT belongs to the baseband unit. Alternatively, it may be described as that the split point is the FFT, and the FFT belongs to the radio frequency unit. Alternatively, it may be described as that the split point is between the FFT and the BWT.

For example, in FIG. 9, a cell 0 is used as a primary cell, and a cell 1 is used as a cooperating cell. For the primary cell and the cooperating cell, refer to the foregoing descriptions. A split point between a radio frequency unit corresponding to the cell 0 and the baseband unit and a split point between a radio frequency unit corresponding to the cell 1 and the baseband unit are the same, and specifically, the split points are between the FFT and the BWT. In a design, the radio frequency unit corresponding to the cell 0 may receive an uplink signal in the cell 0. In addition to performing radio frequency processing on the uplink signal, the radio frequency unit further performs FFT processing on the uplink signal at the physical layer. Optionally, the uplink signal with the FFT processing may be an uplink frequency domain signal. The radio frequency unit sends the uplink signal with the FFT processing to the baseband unit. Similarly, the radio frequency unit corresponding to the cell 1 may receive an uplink signal in the cell 1. In addition to performing radio frequency processing on the uplink signal, the radio frequency unit further performs FFT processing on the uplink signal at the physical layer. Further, the radio frequency unit sends the uplink signal with the FFT processing to the baseband unit. The baseband unit jointly processes the uplink signal of the cell 0 and the uplink signal of the cell 1. For example, after the baseband unit at the physical layer sequentially performs BWT, CE, Ruu, and other processing at the physical layer on the uplink signal of the cell 0 and the uplink signal of the cell 1, joint channel estimation may be performed on the uplink signal of the cell 0 and the uplink signal of the cell 1 through the MIMO equalization, to obtain a channel estimation result. Then, demodulation, decoding, and other processing are sequentially performed on an output of the MIMO equalization. It may be understood that in FIG. 9, the HARQ combination may be optional. In the diagram of FIG. 9, the HARQ combination may exist. Alternatively, the HARQ combination may not exist. When the HARQ combination is performed, an output of the demodulation can be transparently transmitted to an input of the decoding through the HARQ combination. Alternatively, when the HARQ combination does not exist, the output of demodulation is directly input to the input of decoding, or the like.

It may be understood that the uplink signal of the cell 0 and the uplink signal of the cell 1 may be uplink signals of a same terminal. The uplink signals of the same terminal are received in different cells, and the uplink signals of the same terminal are jointly processed, so that signal receiving and processing performance of the terminal may be improved. Alternatively, the uplink signal of the cell 0 and the uplink signal of the cell 1 may be uplink signals of different terminals. As described above, a cell that causes great interference to a primary cell may be referred to as a cooperating cell. In this case, the uplink signal of the cell 0 and the uplink signal of the cell 1 are jointly processed. The process may include: The cell 1 serves as a cooperating cell, and the uplink signal reported by the radio frequency unit corresponding to the cell 1 may be used as known interference; and the known interference is eliminated from the uplink signal corresponding to the cell 0, thereby improving demodulation quality of the uplink signal corresponding to the cell 0 and improving transmission quality of the uplink signal in the primary cell.

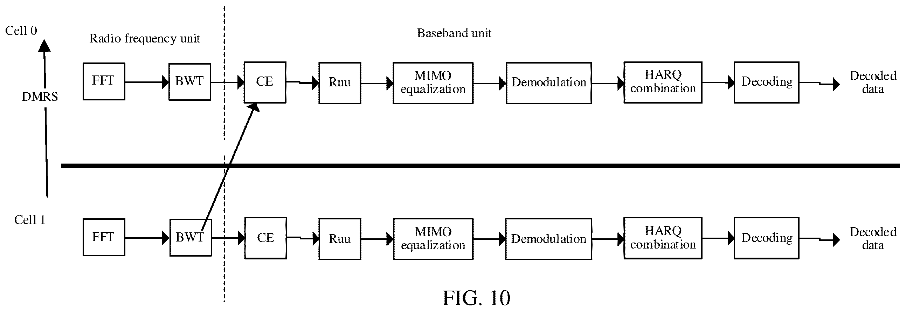

In another design, as shown in FIG. 10, when the transmission bandwidth between the baseband unit and the radio frequency unit is greater than the first threshold, the split point between the baseband unit and the radio frequency unit at the physical layer is the BWT, and the BWT belongs to the radio frequency unit. Alternatively, it may be described as that the split point is the CE, and the CE belongs to the baseband unit. Alternatively, it may be described as that the split point is between the BWT and the CE.

A difference between FIG. 10 and FIG. 9 lies in that, in FIG. 9, the BWT belongs to the baseband unit; and in FIG. 10, the BWT belongs to the radio frequency unit. Another processing processes in FIG. 10 are similar to those in FIG. 9, and details are not described again.

It should be noted that, in an uplink joint processing process, different split points may cause different performance gains of the uplink joint processing. For example, if the split point is closer to an FFT functional module at the physical layer, a performance gain of the uplink joint processing is greater. In a solution in which the split point between the baseband unit and the radio frequency unit at the physical layer is fixed, even if there is an enough transmission bandwidth between the baseband unit and the radio frequency unit, the split point between the baseband unit and the radio frequency unit at the physical layer cannot be changed. However, in embodiments of this application, when it is determined that the transmission bandwidth between the baseband unit and the radio frequency unit is large enough, for example, greater than the first threshold, it may be determined that the split point between the baseband unit and the radio frequency unit at the physical layer is before the channel equalization. If the split point is closer to the FFT functional module in the preprocessing, the performance gain of the uplink joint processing is greater.

### Example 2

If the transmission bandwidth between the baseband unit and the radio frequency unit is less than or equal to (or less than) the first threshold and is greater than (or greater than or equal to) the second threshold, it is determined that the split point between the baseband unit and the radio frequency unit at the physical layer is the channel equalization or a functional module after the channel equalization, and before the HARQ combination.

For description of the first threshold, refer to Example 1. The second threshold may be preset, specified in a protocol, determined by the access network device, notified by another device to the access network device, or the like. This is not limited. For example, the access network device or another device may determine the first threshold and the second threshold in a manner such as simulation, a related algorithm, or AI. For example, it is found through simulation that, for an uplink signal with the channel equalization and without the HARQ combination, a bandwidth for the uplink signal is usually less than the first threshold and greater than the second threshold, and in this case, the first threshold and the second threshold may be determined as two determining thresholds in Example 2.

In a design, the channel equalization includes at least one of the following functions: CE, Ruu, or MIMO equalization. That the split point between the baseband unit and the radio frequency unit at the physical layer is the channel equalization or a functional module after the channel equalization and before the HARQ combination includes: The split point between the baseband unit and the radio frequency unit at the physical layer is the MIMO equalization or a functional module after the MIMO equalization and before the HARQ combination. For example, the split point between the baseband unit and the radio frequency unit may be specifically the demodulation, or other functional modules. It may be understood that, in a description, when the transmission bandwidth between the baseband unit and the radio frequency unit is less than or equal to the first threshold and is greater than the second threshold, it may be determined that the split point between the baseband unit and the radio frequency unit is the HARQ combination. In this case, the split point HARQ combination belongs to the baseband unit.

The example in Example 1 is still used. The functional modules at the physical layer include one or more of the following: FFT, BWT, CE, Ruu, MIMO equalization, demodulation, HARQ combination, decoding, and the like.

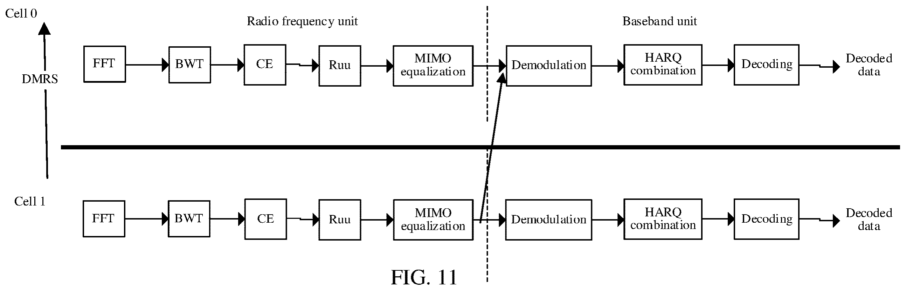

As shown in FIG. 11, when the transmission bandwidth between the baseband unit and the radio frequency unit is less than or equal to the first threshold and is greater than the second threshold, the split point between the baseband unit and the radio frequency unit at the physical layer is the demodulation, and the demodulation belongs to the baseband unit. Alternatively, the split point in FIG. 11 may be described as that the split point between the baseband unit and the radio frequency unit at the physical layer is the MIMO equalization, and the MIMO equalization belongs to the radio frequency unit. Alternatively, the split point in FIG. 11 may be described as that the split point between the baseband unit and the radio frequency unit at the physical layer is between the MIMO equalization and the demodulation.

As shown in FIG. 11, a cell 0 is used as a primary cell, and a cell 1 is used as a cooperating cell. A radio frequency unit corresponding to the cell 0 receives the uplink signal in the cell 0, and performs processing such as FFT, BWT, CE, Ruu, or MIMO equalization at the physical layer on the uplink signal after performing radio frequency processing on the uplink signal. Then, the radio frequency unit corresponding to the cell 0 sends the uplink signal with the MIMO equalization to the baseband unit. Similarly, the radio frequency unit corresponding to the cell 1 receives the uplink signal in the cell 1, performs processing such as FFT, BWT, CE, Ruu, and MIMO equalization on the uplink signal at the physical layer, and sends such an uplink signal to the baseband unit. The baseband unit jointly processes the uplink signal of the cell 0 and the uplink signal of the cell 1. For example, the baseband unit performs joint demodulation, HARQ combination, decoding, and the like on the uplink signals of the two cells.

In addition to the design in FIG. 11, it may be understood that, when the transmission bandwidth between the baseband unit and the radio frequency unit is less than or equal to the first threshold and is greater than the second threshold, the split point between the baseband unit and the radio frequency unit at the physical layer is the demodulation, and the demodulation belongs to the radio frequency unit. Alternatively, the split point between the baseband unit and the radio frequency unit at the physical layer is the HARQ combination, and the HARQ combination belongs to the baseband unit.

In the foregoing design, the following factor is mainly considered: When the transmission bandwidth between the baseband unit and the radio frequency unit is less than or equal to the first threshold and is greater than the second threshold, it may be considered that the transmission bandwidth between the baseband unit and the radio frequency unit is at a middle level. After the uplink signal is processed by the MIMO equalization functional module, a bandwidth required for the uplink signal is less. Therefore, a function of the MIMO equalization is considered to be implemented in the radio frequency unit. Optionally, the radio frequency unit may be further configured to implement a function of the demodulation in FIG. 11. Certainly, the function of the demodulation may alternatively be configured to be implemented in the baseband unit. This is not limited. An application scenario of the solution in embodiments of this application includes jointly processing uplink signals. Therefore, the HARQ combination needs to be configured to be implemented in the baseband unit, so that the baseband unit performs combination on a plurality of uplink signals uploaded by a plurality of radio frequency units.

Optionally, in a description, the HARQ combination is used for combining an initially transmitted signal and a retransmitted signal. It may be understood that, in embodiments of this application, the HARQ combination is used for combining uplink signals reported by a plurality of radio frequency units. It may be considered that, in embodiments of this application, the uplink signals reported by the plurality of radio frequency units are combined by using the "HARQ combination" functional module at the physical layer. Optionally, the "HARQ combination" functional module may be replaced with a "combination" functional module. Alternatively, the uplink signals of the plurality of radio frequency units may be combined in another functional module of the physical layer. For example, in FIG. 11, there may be no "HARQ combination" functional module, and the uplink signals of the plurality of radio frequency units may be combined in the "demodulation" functional module. This is not limited. For example, in the "demodulation" functional module, demodulation may be performed on an uplink signal of each radio frequency unit, and then demodulated uplink signals of the plurality of radio frequency units are combined.

### Example 3

When the transmission bandwidth between the baseband unit and the radio frequency unit is less than or equal to (or smaller than) the second threshold, the split point between the baseband unit and the radio frequency unit at the physical layer is the HARQ combination or a functional module after the HARQ combination. It may be understood that, in a description, when the transmission bandwidth between the baseband unit and the radio frequency unit is less than or equal to the second threshold, and the split point between the baseband unit and the radio frequency unit is the HARQ combination, the split point HARQ combination belongs to the radio frequency unit in this case.

In the description of FIG. 7, the functional module after the HARQ combination includes descrambling, de-rate matching, decoding, or the like. When the transmission bandwidth between the baseband unit and the radio frequency unit is less than or equal to the second threshold, the split point between the baseband unit and the radio frequency unit at the physical layer may be descrambling, de-rate matching, decoding, or the like. This is not limited.

It may be understood that, when the determined split point between the baseband unit and the radio frequency unit is the decoding, and the decoding belongs to the radio frequency unit, all functional modules at the physical layer are implemented in the radio frequency unit in this case. Optionally, the baseband unit may implement functional modules at a MAC layer and an RLC layer. Further, the baseband unit may further implement a functional module at a PDCP layer.

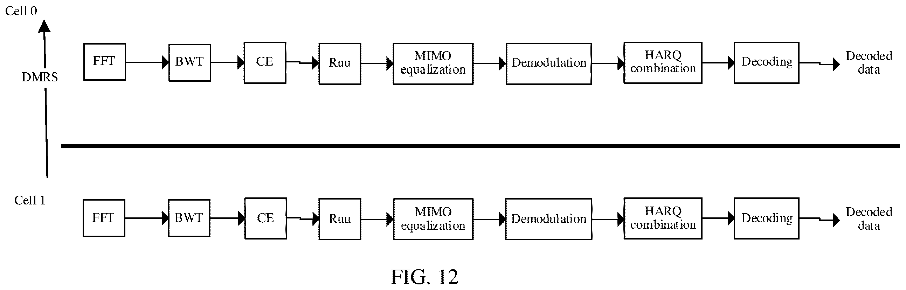

As shown in FIG. 12, the physical layer includes at least one of the following functional modules: FFT, BWT, CE, Ruu, MIMO equalization, demodulation, HARQ combination, decoding, and the like.

When the transmission bandwidth between the baseband unit and the radio frequency unit is less than or equal to the second threshold, the split point between the baseband unit and the radio frequency unit at the physical layer may be the HARQ combination or a functional module after the HARQ combination.

For example, as shown in FIG. 12, in the functional modules at the physical layer, decoding is included after HARQ combination, and it may be determined that the split point between the baseband unit and the radio frequency unit is the decoding, and the decoding belongs to the radio frequency unit. Alternatively, in another description, all functional modules at the physical layer are all configured in the radio frequency unit.

In FIG. 12, a radio frequency unit corresponding to a cell 0 receives an uplink signal in the cell 0, and the radio frequency unit performs all processing at the physical layer on the uplink signal. For example, the radio frequency unit performs FFT, BWT, CE, Ruu, MIMO equalization, demodulation, HARQ combination, decoding, and other processing at the physical layer on the uplink signal. The radio frequency unit sends a processed uplink signal of the cell 0 to the baseband unit. Similarly, a radio frequency unit corresponding to the cell 0 receives the uplink signal in the cell 1, and the radio frequency unit performs all processing at the physical layer on the uplink signal. For example, the radio frequency unit performs FFT, BWT, CE, Ruu, MIMO equalization, demodulation, HARQ combination, decoding, and other processing at the physical layer on the uplink signal. The radio frequency unit sends a processed uplink signal of the cell 1 to the baseband unit. In a scenario of uplink joint processing, the baseband unit may jointly process the uplink signal of the cell 0 and the uplink signal of the cell 1 at the MAC layer and/or the RLC layer. Alternatively, in a non-joint processing scenario, the baseband unit may separately process the uplink signal of the cell 0 and the uplink signal of the cell 1 at the MAC layer and the RLC layer, or the like. This is not limited.

It may be understood that, in addition to the design in FIG. 12, when the transmission bandwidth between the baseband unit and the radio frequency unit is less than or equal to the second threshold, the split point between the baseband unit and the radio frequency unit at the physical layer may be the decoding, and the decoding belongs to the baseband unit. Alternatively, the split point between the baseband unit and the radio frequency unit may be the HARQ combination, and the HARQ combination belongs to the radio frequency unit. The two designs are merely different in description, and correspond to the same solution essence. For example, the essence of the two solutions is that the split point is either the HARQ combination or the decoding, the HARQ combination belongs to the radio frequency unit, and the decoding belongs to the baseband unit.

It may be understood that in FIG. 12, the HARQ combination may be optional. For example, the split point between the baseband unit and the radio frequency unit is the decoding, and the decoding may belong to the radio frequency unit, the baseband unit, or the like. An output of the demodulation may be directly input to an input of the decoding, or the output of the demodulation may be transparently transmitted to the input of the decoding through the HARQ combination, or the like.

In the design of the example 3, the following is mainly considered: When the transmission bandwidth between the baseband unit and the radio frequency unit is less than or equal to the second threshold, it indicates that the transmission bandwidth between the baseband unit and the radio frequency unit is small, and a data amount of an uplink signal that can be transmitted is limited. In this case, a data amount of an uplink signal with the HARQ combination is small enough, so that the HARQ combination is implemented in the radio frequency unit. Whether the functional module after the HARQ combination is implemented in the radio frequency unit is not limited.

In uplink transmission, the access network device may send scheduling information of a demodulation reference signal (demodulation reference signal, DMRS) to the terminal. The terminal sends the DMRS to the access network device based on scheduling of the DMRS. Further, the terminal may further send an uplink signal to the access network device. For example, the uplink signal may be carried on a physical uplink shared channel (physical uplink shared channel, PUSCH) for transmission. The access network device demodulates the PUSCH based on the DMRS, to obtain the uplink signal. In a design, the access network device performs demodulation, based on a DMRS of each cell, on the uplink signal received in each cell. For example, the access network device performs demodulation, based on a DMRS of a primary cell, on the uplink signal received in the primary cell; and performs demodulation, based on a DRMS of a cooperating cell, on the uplink signal received in the cooperating cell. In embodiments of this application, the access network device may perform joint demodulation on the uplink signals received in the primary cell and the cooperating cell, and the like.

For example, the access network device may obtain scheduling information of the DRMS of the primary cell and scheduling information of the DMRS of the cooperating cell. For the primary cell and cooperating cell, refer to the preceding description. The access network device may demodulate the uplink signal of the primary cell or the uplink signal of the cooperating cell based on the scheduling information of the DRMS of the primary cell and the scheduling information of the DMRS of the cooperating cell. For example, the access network device may obtain the DMRS of the primary cell based on the scheduling information of the DMRS of the primary cell, obtain the DMRS of the cooperating cell based on the DMRS scheduling information of the cooperating cell, and demodulate, based on the DMRS of the primary cell and the DMRS of the cooperating cell, the uplink signal received in the primary cell. For example, as shown in FIG. 9 to FIG. 12, after the uplink signal received in the primary cell is processed through the FFT and the BWT in sequence, channel estimation CE may be performed on the uplink signal of the primary cell based on the DMRS of the primary cell and the DMRS of the cooperating cell, to obtain a channel estimation result of the primary cell, and the like. Then, processing such as Ruu, MIMO equalization, demodulation, HARQ combination, and decoding continues to be performed on the uplink signal of the primary cell. Alternatively, the uplink signal received in the cooperating cell is demodulated based on the DMRS of the primary cell and the DMRS of the cooperating cell. The process of demodulating the uplink signal of the cooperating cell is similar to the process of demodulating the uplink signal of the primary cell. This is not described herein again. Alternatively, the access network device may perform joint demodulation or the like on the uplink signal of the primary cell and the uplink signal of the cooperating cell based on the scheduling information of the DMRS of the primary cell and the scheduling information of the DMRS of the cooperating cell. This is not limited. For example, the access network device may separately obtain the DMRS of the primary cell and the DMRS of the cooperating cell based on the scheduling information of the DMRS of the primary cell and the scheduling information of the DMRS of the cooperating cell. The access network device performs joint demodulation on the uplink signal of the primary cell and the uplink signal of the cooperating cell based on the DMRS of the primary cell and the DMRS of the cooperating cell. For example, in a design, for the uplink signal received in the primary cell, the access network device may sequentially perform processing such as FFT and BWT. For the uplink signal received in the cooperating cell, the access network device sequentially performs processing such as FFT and BWT. In the channel estimation CE, the access network device performs channel estimation CE based on the DMRS of the primary cell and the DMRS of the cooperating cell, to obtain channel information of the primary cell and channel information of the cooperating cell. Then, joint demodulation is performed on the uplink signal of the primary cell and the uplink signal of the cooperating cell based on the channel information of the primary cell and the channel information of the cooperating cell. For example, processing such as Ruu, MIMO equalization, demodulation, HARQ combination, and decoding is sequentially performed on the uplink signal of the primary cell and the uplink signal of the cooperating cell.

It may be understood that in the foregoing Example 1 to Example 3, the uplink signal may be demodulated by using the foregoing demodulation solution. For example, in FIG. 9 to FIG. 12, the cell 0 is used as a primary cell, and the cell 1 may be used as a cooperating cell. A determined split point between a radio frequency unit and a baseband unit that correspond to the primary cell and a determined split point between a radio frequency unit and a baseband unit that correspond to the cooperating cell are the same. For example, in FIG. 9, the split points between the radio frequency units and the baseband units corresponding to the two cells are both the BWT. Certainly, split points between radio frequency units and baseband units corresponding to different cells may be different. This is not limited. For the primary cell, namely, the cell 0, DMRS information of the cooperating cell (namely, the cell 1) may be considered when demodulation at the physical layer is performed on the uplink signal of the primary cell. Certainly, for the cooperating cell (namely, the cell 1), DMRS information of the primary cell (namely, the cell 0) may be considered when demodulation at the physical layer is performed on the uplink signal of the cooperating cell, or the like. Alternatively, it may be considered that performing the joint demodulation on the uplink signal of the primary cell and the uplink signal of the cooperating cell at the physical layer by using the DMRS of the primary cell and the DMRS of the cooperating cell. The latter two cases are not schematically illustrated in FIG. 9 to FIG. 12.

Because the primary cell and the cooperating cell are associated cells, the uplink signal of the primary cell and/or the uplink signal of the cooperating cell are/is demodulated based on the scheduling information of the DMRSs of the two cells, which can improve uplink signal demodulation performance, compared with demodulating an uplink signal of one cell based on scheduling information of a DMRS of the cell.

In uplink transmission, an application scenario of embodiments of this application includes: uplink coordinated multipoint transmission/reception (coordinated multipoint transmission/reception, CoMP). The uplink CoMP refers to that a plurality of geographically separated transmission points jointly receive data sent by a terminal. In embodiments of this application, the plurality of geographically separated transmission points may be considered as a plurality of radio frequency units, and each radio frequency unit corresponds to one cell. Each radio frequency unit may receive an uplink signal in a corresponding cell through a corresponding antenna. The baseband unit jointly processes uplink signals of a plurality of cells. In embodiments of this application, the split point between the radio frequency unit and the baseband unit at the physical layer is flexibly determined based on the transmission bandwidth between the radio frequency unit and the baseband unit, to improve uplink CoMP performance. For example, in embodiments of this application, when the transmission bandwidth between the radio frequency unit and the baseband unit is greater than the first threshold, it is determined that the split point between the radio frequency unit and the baseband unit at the physical layer is without the MIMO equalization, and each radio frequency unit may report an uplink signal before the MIMO equalization to the baseband unit. The baseband unit performs joint processing such as MIMO equalization on uplink signals reported by different radio frequency units, to improve uplink signal demodulation performance.

### Downlink transmission

Downlink transmission is used as an example. When obtaining a downlink signal from a MAC layer, a baseband unit may perform processing at a physical layer on the downlink signal. As shown in FIG. 5, the physical layer includes at least one of the following functional modules: encoding, speed matching, scrambling, modulation, layer mapping, precoding, RE mapping, digital BF, IFFT/CP addition, or the like.

The split point between the radio frequency unit and the baseband unit at the physical layer may be determined based on the transmission bandwidth between the radio frequency unit and the baseband unit. For example, the split point between the radio frequency unit and the baseband unit at the physical layer may be determined based on a value relationship between the transmission bandwidth between the radio frequency unit and the baseband unit and a third threshold and/or a fourth threshold. A value of the third threshold is greater than that of the fourth threshold. The third threshold and the fourth threshold may be predetermined, specified in a protocol, determined by the access network device, determined by another device and indicated to the access network device, or the like. This is not limited.

For example, in a design, when the transmission bandwidth between the radio frequency unit and the baseband unit is greater than (or greater than or equal to) the third threshold, it is determined that the split point between the radio frequency unit and the baseband unit at the physical layer is close to a MAC layer side. Alternatively, when the transmission bandwidth between the radio frequency unit and the baseband unit is less than or equal to (or less than) the third threshold and is greater than (or greater than or equal to) the fourth threshold, it is determined that the split point between the radio frequency unit and the baseband unit at the physical layer is a middle functional module. Alternatively, when the transmission bandwidth between the radio frequency unit and the baseband unit is less than or equal to (or less than) the fourth threshold, it is determined that the split point between the radio frequency unit and the baseband unit at the physical layer is close to a radio frequency side, or the like.

It may be understood that in downlink transmission, functional modules at the physical layer may include more or fewer functional modules than those shown in FIG. 5, and the like. This is not limited.

The solutions of this application may be applied to the radio frequency unit or the baseband unit, or may be applied to a unit other than the radio frequency unit and the baseband unit in the access network device, or the like. This is not limited. An example in which the solutions of this application are applied to the radio frequency unit is used. In this case, the solutions of embodiments of this application are executed by the radio frequency unit, or are applied to a component such as a chip or a circuit in the radio frequency unit.

An example in which the solutions are executed by the radio frequency unit is used. In this case, in addition to step 601 that needs to be performed by the radio frequency unit, the procedure shown in FIG. 6 may further include the following step.

Optionally, step 602a: The radio frequency unit sends indication information of the split point at the physical layer to the baseband unit.

To be specific, the radio frequency unit determines the split point between the baseband unit and the radio frequency unit at the physical layer based on the transmission bandwidth between the baseband unit and the radio frequency unit.

In uplink transmission, the radio frequency unit may implement a functional module before the split point at the physical layer. In uplink transmission, the functional module before the split point is closer to a radio frequency end. The radio frequency unit sends the indication information of the split point at the physical layer to the baseband unit. When receiving the indication information, the baseband unit may determine, based on the split point indicated by the indication information, a functional module implemented at the physical layer of the baseband unit, which may be referred to as a lower-layer functional module of the physical layer. In uplink transmission, the baseband unit implements a functional module after the split point. The functional module after the split point is closer to a MAC end, and may be referred to as a higher-layer functional module of the physical layer. Optionally, the split point may be implemented in the radio frequency unit, or implemented in the baseband unit, or the like. This is not limited.

In downlink transmission, the radio frequency unit may implement a functional module after the split point at the physical layer. In downlink transmission, the functional module after the split point is closer to the radio frequency end, and may be referred to as a lower-layer functional module of the physical layer. The baseband unit may implement a functional module before the split point at the physical layer. In downlink transmission, the functional module before the split point at the physical layer is closer to the MAC end, and may be referred to as a higher-layer functional module of the physical layer. Alternatively,

an example in which the solutions of this application are applied to the baseband unit is used. In this case, the solutions of embodiments of this application are executed by the baseband unit, or are applied to a component such as a chip or a circuit in the baseband unit.

An example in which the solutions are executed by the baseband unit is used. In this case, in addition to step 601 that needs to be performed by the baseband unit, the procedure shown in FIG. 6 may further include the following step.

Step 602b: The baseband unit sends indication information of the split point at the physical layer to the radio frequency unit.

It may be understood that in embodiments of this application, the indication information may explicitly or implicitly indicate a functional module corresponding to the split point. For example, function models of the physical layer may correspond to different indexes, and the indication information may indicate an index of the functional module corresponding to the split point. Alternatively, other information that has a correspondence with the functional module of the split point may indicate the split point, or the like. This is not limited.

It may be understood that the solutions in embodiments of this application may be applied to various categories of fronthaul interfaces. For example, the solutions in embodiments of this application may be applied to all categories of fronthaul interfaces such as eCPRI Cat A to Cat F. In a current design, although different categories of fronthaul interfaces may have different split points at the physical layer, for any category of fronthaul interface, a split point at the physical layer is fixed. In the solution in embodiments of this application, for any category of fronthaul interface, the split point between the radio frequency unit and the baseband unit at the physical layer may be flexibly adjusted based on the transmission bandwidth of the radio frequency unit and the baseband unit.

It may be understood that, for a same radio frequency unit, when the transmission bandwidth between the radio frequency unit and the baseband unit is fixed, according to the solution in embodiments of this application, determined split points in uplink transmission and downlink transmission may be the same or different. For example, for a radio frequency unit, the radio frequency unit may be referred to as a target radio frequency unit. In uplink transmission, it is determined that a split point between the target radio frequency unit and the baseband unit at the physical layer is a function model A based on a transmission bandwidth between the target radio frequency unit and the baseband unit. In downlink transmission, it is determined that a split point between the target radio frequency unit and the baseband unit at the physical layer is a functional module B based on the transmission bandwidth between the target radio frequency unit and the baseband unit. The functional module A and the functional module B may be the same or different. This is not limited.

It may be understood that the solutions in embodiments of this application may be applied to an ORAN system, and the baseband unit may include an O-DU, and may further include an O-CU-CP and an O-CU-UP. The O-DU may implement functions of an RLC layer, a MAC layer, and a physical layer-higher layer. The radio frequency unit includes an O-RU, and the O-RU may implement a function of a physical layer-lower layer. According to the solution in embodiments of this application, a functional module of a physical layer implemented in the O-DU, namely, a functional module of a physical layer included in a physical layer-higher layer can be flexibly adjusted, and a functional module of a physical layer implemented in the O-RU, namely, a functional module of a physical layer included in a physical layer-lower layer can be determined. It may be understood that, in an implementation of the foregoing Example 3, the radio frequency unit implements all functions of the physical layer. In this case, the O-DU may no longer implement the functions of the physical layer, and in this case, the O-DU may implement functions of the RLC layer and the MAC layer.

It may be understood that, to implement functions in the foregoing methods, the access network device includes corresponding hardware structures and/or software modules for performing the functions. A person skilled in the art should be easily aware that, with reference to units and method steps in the examples described in this application, this application can be implemented by hardware or a combination of hardware and computer software. Whether a function is performed by hardware or hardware driven by computer software depends on particular application scenarios and design constraint conditions of the technical solutions.

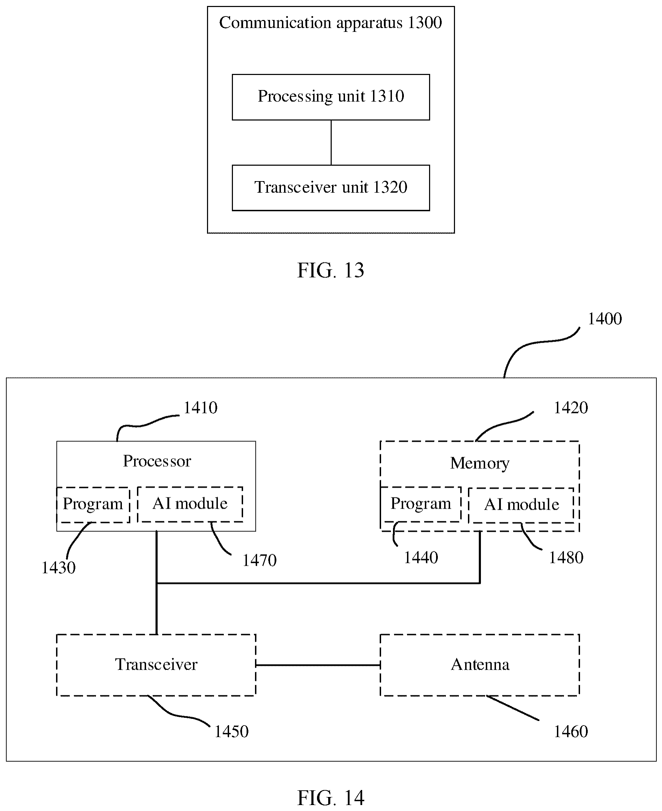

FIG. 13 and FIG. 14 are diagrams of structures of possible communication apparatuses according to this application. These communication apparatuses may be configured to implement functions of the access network device in the foregoing methods. Therefore, beneficial effects of the foregoing methods can also be achieved. In this application, the communication apparatus may be the access network device 110a or 110b shown in FIG. 1, or may be a module (for example, a chip) used in the access network device.

As shown in FIG. 13, a communication apparatus 1300 includes a processing unit 1310 and a transceiver unit 1320. The communication apparatus 1300 is configured to implement the functions of the access network device in the foregoing method embodiments.

When the communication apparatus 1300 is configured for the functions of the access network device in the foregoing method embodiments, the processing unit 1310 is configured to determine a split point between a baseband unit and a radio frequency unit at a physical layer based on a transmission bandwidth between the baseband unit and the radio frequency unit. The radio frequency unit implements a functional module between the split point and a radio frequency function at the physical layer. The baseband unit implements a functional module between the split point and a media access control MAC layer at the physical layer, and a functional module corresponding to the split point is implemented by the baseband unit or the radio frequency unit. Optionally, the transceiver unit 1320 is configured to send indication information of the split point to the radio frequency unit, or send the indication information of the split point to the baseband unit.

For more detailed descriptions about the processing unit 1310 and the transceiver unit 1320, directly refer to related descriptions in the foregoing method embodiments. Details are not described herein.

FIG. 14 is a diagram of a structure of a possible communication apparatus. It may be understood that the communication apparatus 1400 includes means (means) in a necessary form such as a module, a unit, an element, a circuit, or an interface, to properly configure the means together to perform the method in embodiments of this application. The communication apparatus 1400 may be the access network device in FIG. 1, or may be a component (for example, a chip) in the access network device, to implement the method described in embodiments of this application.

For example, the communication apparatus 1400 includes one or more processors 1410. The processor 1410 may be a general-purpose processor or a dedicated processor. For example, the processor may be a baseband processor or a central processing unit. The baseband processor may be configured to process a communication protocol and communication data. The central processing unit may be configured to control the communication apparatus (for example, an access network device) to execute a software program and process data of the software program.

Optionally, in a design, the processor 1410 may include a program 1430 (which may also be referred to as code or instructions sometimes). The program 1430 may be run on the processor 1410, so that the communication apparatus 1400 performs the method described in embodiments of this application. In still another possible design, the communication apparatus 1400 includes a circuit (not shown in FIG. 14). The circuit is configured to implement functions such as determining a split point between a baseband unit and a radio frequency unit at a physical layer based on a transmission bandwidth between the baseband unit and the radio frequency unit in embodiments of this application.

Optionally, the communication apparatus 1400 may include one or more memories 1420, and a program 1440 (which may also be referred to as code or instructions sometimes) is stored in the memory 1420. The program 1440 may be run on the processor 1410, so that the communication apparatus 1400 performs the method described in embodiments of this application.

Optionally, the processor 1410 and/or the memory 1420 may include an AI module 1470 and 1480, and the AI module is configured to implement an AI-related function. The AI module may be implemented by using software, hardware, or a combination of software and hardware. For example, the AI module may include a radio access network intelligent controller (RAN intelligent controller, RIC) module. For example, the AI module may be a near-real-time RIC or a non-real-time RIC.

Optionally, the processor 1410 and/or the memory 1420 may further store data. The processor and the memory may be separately disposed, or may be integrated together.

Optionally, the communication apparatus 1400 may further include a transceiver 1450 and/or an antenna 1460. The processor 1410 may also be referred to as a processing unit sometimes, and controls a communication apparatus (for example, an access network device). The transceiver 1450 sometimes may be referred to as a transceiver unit, a transceiver machine, a transceiver circuit, a transceiver, or the like, and is configured to implement a transceiver function of the communication apparatus through the antenna 1460.

It may be understood that the processor in this application may be a central processing unit (central processing unit, CPU), or may be another general-purpose processor, a digital signal processor (digital signal processor, DSP), or an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The memory in this application may be a random access memory, a flash memory, a read-only memory, a programmable read-only memory, an erasable programmable read-only memory, an electrically erasable programmable read-only memory, a register, a hard disk drive, a removable hard disk, a CD-ROM, or a storage medium of any other form well-known in the art.

For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

Methods in this application may be wholly or partially implemented by software, hardware, firmware, or any combination thereof. When software is used to implement the methods, all or a part of the methods may be implemented in a form of a computer program product. The computer program product includes one or more computer programs or instructions. When the computer programs or instructions are loaded and executed on the computer, the procedure or functions according to this application are completely or partially generated. The computer may be a general-purpose computer, a dedicated computer, a computer network, a network device, user equipment, a core network device, OAM, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two categories of storage media: a volatile storage medium and a non-volatile storage medium.

In this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" indicates an "or" relationship between associated objects; and in a formula in this application, the character "/" indicates a "division" relationship between associated objects. "Including at least one of A, B, or C" may indicate: including A; including B; including C; including A and B; including A and C; including B and C; and including A, B, and C.

It may be understood that various numerals used in this application are merely differentiated for ease of description, but are not used to limit the scope of this application. Sequence numbers of the foregoing processes do not mean an execution sequence, and the execution sequence of the processes should be determined based on functions and internal logic of the processes.

## Claims

1. A method for determining a split point, comprising:
determining a split point between a baseband unit and a radio frequency unit at a physical layer based on a transmission bandwidth between the baseband unit and the radio frequency unit, wherein
the radio frequency unit implements a functional module between the split point and a radio frequency function at the physical layer, the baseband unit implements a functional module between the split point and a media access control MAC layer at the physical layer, and a functional module corresponding to the split point is implemented by the baseband unit or the radio frequency unit.

2. The method according to claim 1, wherein in uplink transmission, the physical layer comprises at least one of the following functional modules: preprocessing, digital beamforming BF, resource element RE demapping, channel equalization, inverse discrete Fourier transform IDFT, demodulation, hybrid automatic repeat request HARQ combination, descrambling, de-rate matching, or decoding.

3. The method according to claim 2, wherein determining the split point between the baseband unit and the radio frequency unit at the physical layer based on the transmission bandwidth between the baseband unit and the radio frequency unit comprises:
the transmission bandwidth between the baseband unit and the radio frequency unit is greater than a first threshold; and
the split point between the baseband unit and the radio frequency unit at the physical layer is a functional module before the channel equalization.

4. The method according to claim 3, wherein the channel equalization comprises at least one of the following functional modules: channel estimation CE, interference covariance matrix, or multiple-input multiple-output MIMO equalization; and that the split point between the baseband unit and the radio frequency unit at the physical layer is the functional module before the channel equalization comprises:
the split point between the baseband unit and the radio frequency unit at the physical layer is a functional module before the MIMO equalization.

5. The method according to claim 2, wherein determining the split point between the baseband unit and the radio frequency unit at the physical layer based on the transmission bandwidth between the baseband unit and the radio frequency unit comprises:
the transmission bandwidth between the baseband unit and the radio frequency unit is less than or equal to a first threshold and is greater than a second threshold; and
the split point between the baseband unit and the radio frequency unit at the physical layer is the channel equalization or a functional module after the channel equalization and before the HARQ combination.

6. The method according to claim 5, wherein the channel equalization comprises at least one of the following functional modules: CE, interference covariance matrix, or MIMO equalization; and that the split point between the baseband unit and the radio frequency unit at the physical layer is the channel equalization or the functional module after the channel equalization and before the HARQ combination comprises:
the split point between the baseband unit and the radio frequency unit at the physical layer is the MIMO equalization or a functional module after the MIMO equalization and before the HARQ combination.

7. The method according to claim 2, wherein determining the split point between the baseband unit and the radio frequency unit at the physical layer based on the transmission bandwidth between the baseband unit and the radio frequency unit comprises:
the transmission bandwidth between the baseband unit and the radio frequency unit is less than or equal to a second threshold; and
the split point between the baseband unit and the radio frequency unit at the physical layer is the HARQ combination or a functional module after the HARQ combination.

8. The method according to any one of claims 1 to 7, further comprising:
demodulating an uplink signal of a primary cell or an uplink signal of a cooperating cell based on scheduling information of a demodulation reference signal DMRS of the cooperating cell and scheduling information of a DMRS of the primary cell; or
performing joint demodulation on the uplink signal of the primary cell and the uplink signal of the cooperating cell based on the scheduling information of the DMRS of the cooperating cell and the scheduling information of the DMRS of the primary cell.

9. The method according to any one of claims 1 to 8, wherein the method is applied to the baseband unit, and the method further comprises: sending indication information of the split point to the radio frequency unit.

10. The method according to any one of claims 1 to 8, wherein the method is applied to the radio frequency unit, and the method further comprises: sending indication information of the split point to the baseband unit.

11. A communication apparatus, comprising a unit configured to implement the method according to any one of claims 1 to 10.

12. A communication apparatus, comprising a processor, wherein the processor is coupled to a memory, and the processor is configured to implement the method according to any one of claims 1 to 10.

13. A communication system, comprising the communication apparatus according to claim 11 or 12 and a terminal device.

14. A computer-readable storage medium, wherein the computer-readable storage medium stores instructions; and when the instructions are run on a computer, the computer is enabled to perform the method according to any one of claims 1 to 10.

15. A computer program product, comprising instructions, wherein when the instructions are run on a computer, the computer is enabled to perform the method according to any one of claims 1 to 10.
